# EUROPEAN PATENT SPECIFICATION

(11) **EP 3 523 679 B1**
(45) Date of publication and mention of the grant of the patent: **03.05.2023**
(21) Application number: 17787754.5
(22) Date of filing: 05.10.2017
(51) Int. Cl.: G01V 1/20, G01V 1/38, G01V 1/22

(54) **SYSTEM AND METHOD FOR SEISMIC IMAGING USING FIBER OPTIC SENSING SYSTEMS**
SYSTEM UND VERFAHREN ZUR SEISMISCHEN BILDGEBUNG UNTER VERWENDUNG VON OPTISCHEN MESSSYSTEMEN
SYSTÈME ET PROCÉDÉ D'IMAGERIE SISMIQUE UTILISANT DES SYSTÈMES DE DÉTECTION À FIBRE OPTIQUE

(30) Priority: 06.10.2016 US 201662404816 P
(43) Date of publication of application: 14.08.2019
(73) Proprietor: Chevron U.S.A. Inc., San Ramon, California 94583 (US)
(72) Inventor: COCKER, Jonathan David, San Ramon, California 94583 (US); STRUDLEY, Alan Victor, San Ramon, California 94583 (US)
(74) Representative: Haseltine Lake Kempner LLP
(86) International application number: PCT/US2017/055272
(87) International publication number: WO 2018/067781

(56) References cited:
- EP-A1- 2 684 077
- US-A- 5 257 241
- US-A1- 2008 123 467
- US-A1- 2014 046 599
- US-A1- 2014 112 094

## Description

### TECHNICAL FIELD

The disclosed embodiments relate generally to techniques for seismic imaging of subsurface reservoirs and, in particular, to a system and method of recording seismic data using fiber optics sensing systems attached to existing subsea oilfield infrastructure for the purposes of seismic imaging.

### BACKGROUND

Seismic exploration involves surveying subterranean geological media for hydrocarbon deposits. An active survey typically involves deploying seismic sources and seismic sensors at predetermined locations. The sources generate seismic waves, which propagate into the geological medium creating pressure changes and vibrations. Variations in physical properties of the geological medium change the properties of the seismic waves, such as their direction of propagation and other properties.

In addition to active surveys, passive surveys make use of naturally occurring and ambient seismic sources. For example, induced seismicity from stimulation and/or depletion in the subsurface may generate seismic waves that travel through the geological medium. Ambient seismic sources, such as ocean waves, passing ships, and naturally occurring earthquakes may also generate seismic waves that travel through the geological medium.

Portions of the seismic waves reach the seismic sensors. Some seismic sensors are sensitive to pressure changes (e.g., hydrophones), others to particle motion (e.g., geophones), and industrial surveys may deploy one type of sensor or both. In response to the detected seismic waves, the sensors generate corresponding electrical signals, known as traces, and record them in storage media as seismic data. Seismic data will include a plurality of "shots" (individual instances of the seismic source being activated), each of which are associated with a plurality of traces recorded at the plurality of sensors. In addition to hydrophones and geophones, methods using fiber optic point sensors and/or cables as the seismic sensors may position the fiber optic cables on or near the surface or within the boreholes (e.g., distributed acoustic sensors).

Seismic data is processed to create seismic images that can be interpreted to identify subsurface geologic features including hydrocarbon reservoirs. The processing is dependent on the survey design, the quality of the seismic data, and the complexity of the subsurface. In the case of passive surveys, seismic data may be recorded for days or months and used for interferometry.

There exists a need for improved seismic surveys and seismic imaging that may aid in identifying and producing hydrocarbon reservoirs. US 2014/112094 A1 relates to direct velocity seismic sensing. EP 2 684 077 A1 relates to a sensor array. US 2014/046599 A1 relates to a system and method of a reservoir monitoring system. US 5 257 241 A relates to a method and system for acquisition of 3-dimensional marine seismic data. US 2008/123467 A1 relates to a seismic sensors system where fiber-optic seismic sensing cables are connected to a sea surface platform.

### SUMMARY

The present invention is defined by the appended independent claims, to which reference should now be made. Specific embodiments are defined in the dependent claims.

### BRIEF DESCRIPTION OF THE DRAWINGS

Figure 1 is a diagram of a system for seismic surveying using fiber-optic sensors, in accordance with some embodiments;
Figure 2 is a diagram of a system for seismic surveying using fiber-optic sensors, in accordance with some embodiments;
Figure 3A is an example of a seismic image that might be obtained from a conventional fiber-optic survey design;
Figure 3B is an example of a seismic image that might be obtained from a fiber-optic survey design in accordance with some embodiments; and
Figure 4 is an example of a seismic image in the vicinity of a platform.

Like reference numerals refer to corresponding parts throughout the drawings.

### DETAILED DESCRIPTION OF EMBODIMENTS

Described below are methods, systems, and computer readable storage media that provide a manner of seismic imaging. These embodiments are designed to be of particular use for seismic imaging of subsurface volumes near existing subsea infrastructure.

Reference will now be made in detail to various embodiments, examples of which are illustrated in the accompanying drawings. In the following detailed description, numerous specific details are set forth in order to provide a thorough understanding of the present disclosure and the embodiments described herein. However, embodiments described herein may be practiced without these specific details. In other instances, well-known methods, procedures, components, and mechanical apparatus have not been described in detail so as not to unnecessarily obscure aspects of the embodiments.

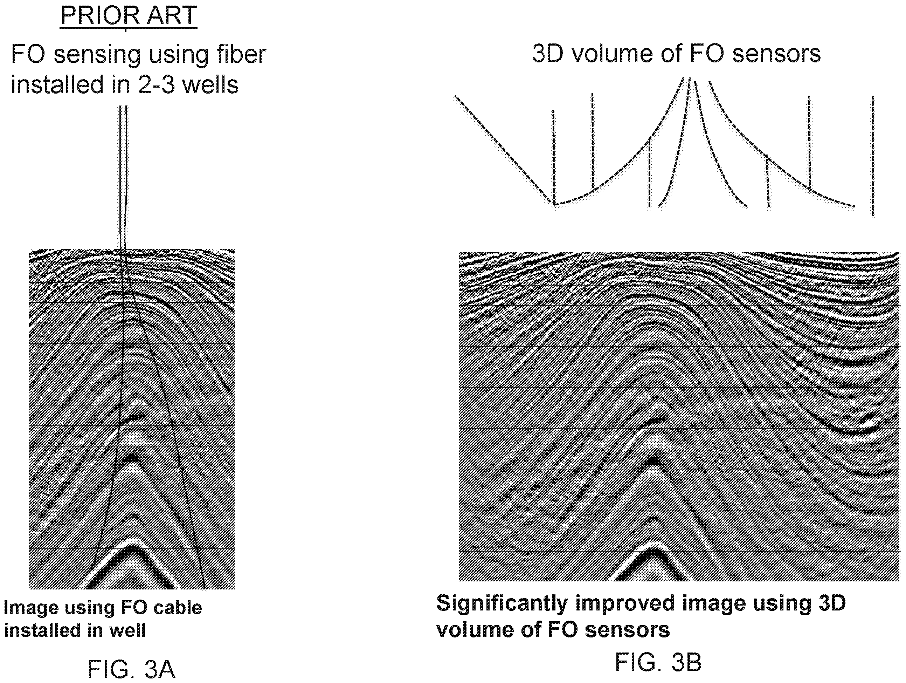

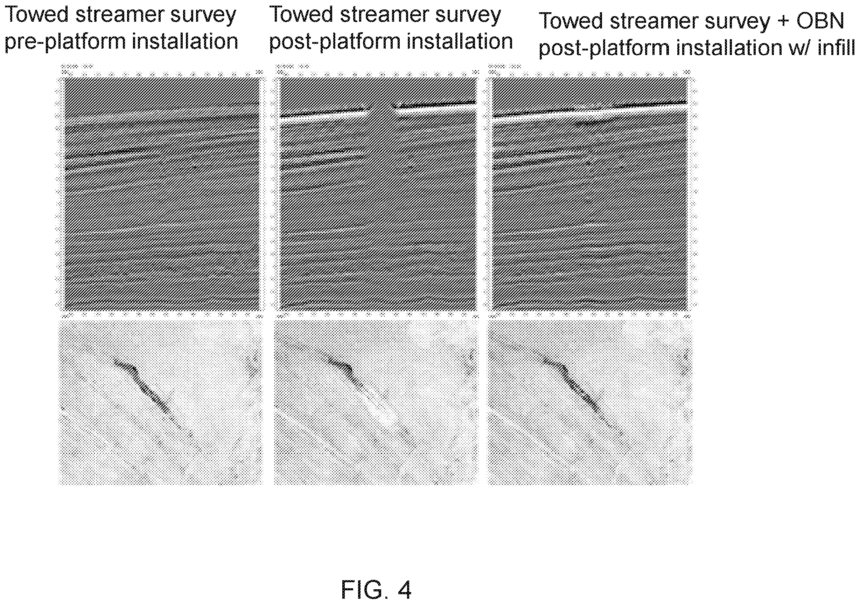

Seismic imaging of the subsurface is used to identify potential hydrocarbon reservoirs. Seismic data is generally acquired at a surface (e.g. the earth's surface, ocean's surface, or at the ocean bottom) or in a borehole as seismic traces, which collectively make up the seismic dataset. The volume of the subsurface that can be imaged using the seismic data depends on the positioning of the seismic sources and receivers. For example, if the receivers are deployed in a borehole, the volume that may be imaged is in the immediate vicinity of the borehole, as seen in Figure 3A. This is not sufficient if the hydrocarbon reservoir has a wide lateral extent, as many do. Further field obstructions limit the coverage/illumination obtainable by surface seismic methods, often requiring costly undershooting operations using multiple vessels or the deployment of sea floor sensors (e.g. OBC or OBN) on the sea floor in the vicinity of the surface obstruction. For example, Figure 4 shows, from left to right, seismic images that are towed streamer survey pre-platform installation, post platform installation, and finally with platform infill (using OBN).

The present invention includes embodiments of a method and system for performing seismic surveys and seismic imaging that may aid in identifying and producing hydrocarbon reservoirs and monitoring for subsurface integrity.

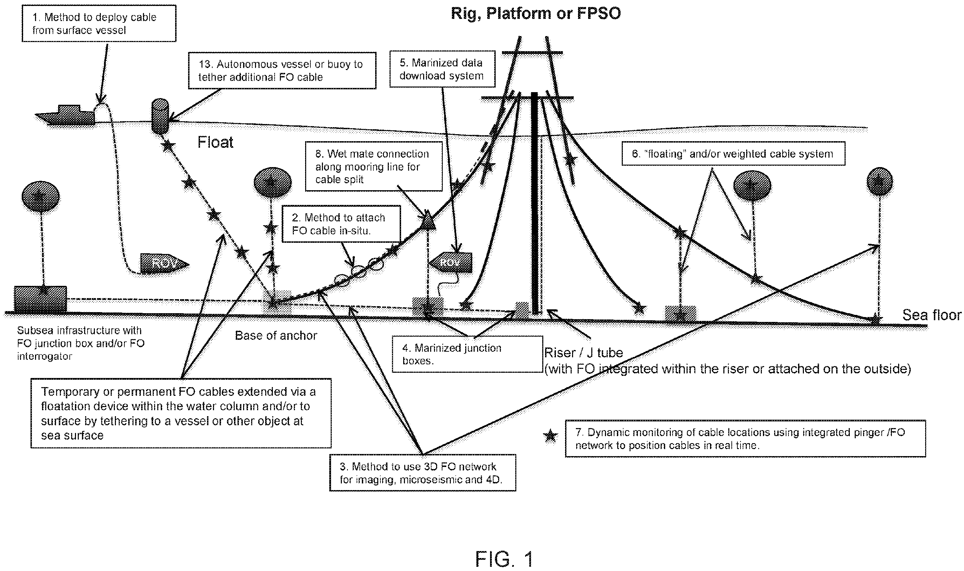

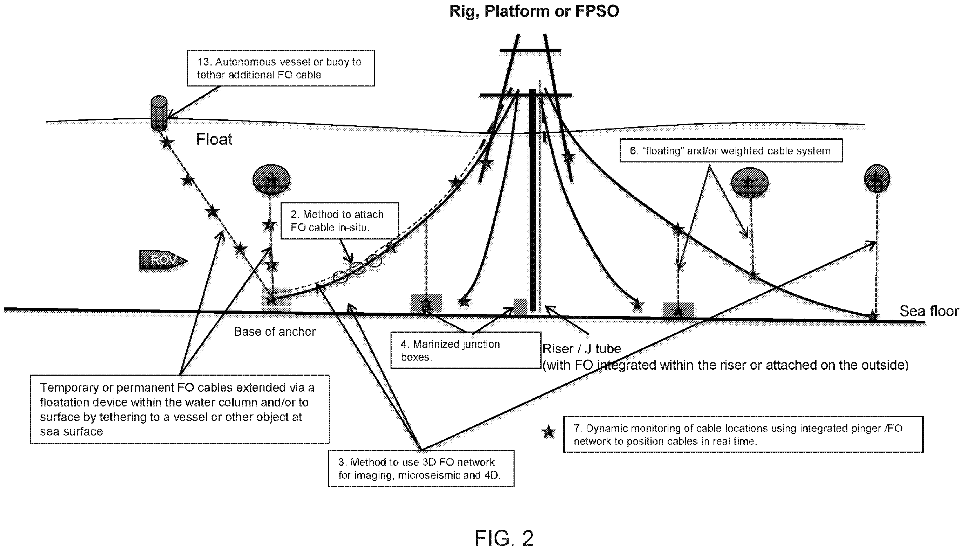

Figures 1 and 2 illustrate diagrams of a system for performing seismic surveys. Figure 1 shows a rig, platform, or FPSO (Floating, Production, Storage, and Offloading vessel) with the necessary anchor chains (also called mooring lines) and riser or J tube that extend from the sea floor to the structure at or above the ocean's surface. This is existing infrastructure placed over a subsurface volume of interest, in general to drill one or more wells into a hydrocarbon reservoir and produce the hydrocarbons. The fiber-optic (FO) cables/sensors are attached to the existing infrastructure, such as the anchor chains and risers. Mooring lines are typically composed of a combination of chains, wire rope, and polyester rope with diameters in the order of 3-12 inches. The mooring lines are typically anchored to the sea floor at a radius of one to two times water depth and under sufficient tension to maintain an almost linear profile. The layout of mooring lines can vary significantly, e.g. ranging from 16 single mooring lines spread evenly around the floating facility to 4 bundles of 4 mooring lines, with each bundle evenly spaced around the floating facility.

The installation of FO cables or sensors in this manner would create a 3D volume of sensors within the water column, with high-density sampling in x, y and z; and relatively sparse sampling in azimuth. This is very different to existing seismic techniques; such as towed streamer, which utilizes long cables with dense receiver sampling in a horizontal or near-horizontal deployment; Ocean Bottom techniques such as Ocean Bottom Nodes or cables (OBN/OBC), which places sensors on the sea floor; Vertical Seismic Profiles (VSP) which typically rely on a small number of vertical or sub-vertical wells that penetrate well below the sea floor; or a vertical cable suspended in the water column. Each of these techniques creates dense sampling in one or two dimensions.

Even though the proposed technique results in significantly better volumetric sampling than other methodologies, the resulting data will still be sparse in many ways. Compensating for this sampling sparsity requires many modifications to existing theory. These modifications are guided by the extension of theories such as those proposed by Stolk and Symes (2004); who showed formally what many seismic imagers know from practical experience: to create artifact-free images we must properly sample and honor reflection/scattered event slownesses (slowness is 1/velocity) on the measurement surface (see their equation (2), which they call "the imaging equations"). Stolk and Symes analysis assumed sources and receivers were confined to a 2D surface (e.g., at the water surface). Their analysis, including the imaging equations, can be extended to allow sources and receivers to occupy 3D dimensions (e.g., a VSP acquisition or the acquisition method proposed above). This extension of Stolk & Symes analysis allows one skilled in the art of seismic imaging to construct imaging procedures that will minimize sampling related artifacts in images produced from VSP or the acquisition method proposed above. Components of such imaging procedures including, but are not limited to: 1. Use of interferometric principles (e.g., see Yu & Schuster 2004); 2. Constraints derived from imaging data from more traditional acquisition geometries - e.g., towed streamer data (see Nemeth et al., 2000 for an example); 3. Imaging via modeling, filtering, and data matching (e.g., Duquet & Marfurt, 1999; Duquet et al. 2000). The processing performed on the seismic data recorded by the system described herein will produce digital seismic output volumes that may include, by way of example but not limitation, seismic post-stack images, seismic pre-stack images, and seismic attributes.

The FO cables or sensors may be deployed from a surface vessel 1. The FO cables or sensors are attached *in situ* to the existing infrastructure 2. In addition, temporary or permanent FO cables/sensors may be extended via a floatation device within the water column and/or to surface by tethering to a vessel or other object at sea surface, such as an autonomous vessel or buoy 13 to increase coverage. The additional FO cables/sensors may also be deployed as floating and/or weighted cables 6. The floating cables would be supported by a sufficiently buoyant gas filled balloon to ensure the cable maintained a relatively linear shape. The floating cables would also be supplemented with a sensor to accurately determine its location in real time and may include some electrical cables for power. Similarly, a cable could be connected to a weight or other seafloor infrastructure to ensure it maintained its position on the sea-floor without adding undue stress to the mooring line.

In order to use the seismic data recorded by the FO cables/sensors, it is necessary to know where they are located in the water column, as currents can cause the cables to move tens of meters in different directions. Accurate positioning of the FO cable/sensor is accomplished by an integrated dynamic monitoring system using a combination of a one-way ranging technique (e.g. Proserv NASNet^{®},) and a network of active and passive receivers (e.g. FO cable - DAS and a network of NasNet type receivers) to provide sub-meter positioning throughout the field. NASNet^{®} Stations provide extremely long range acoustic coverage using 10kHz LF ADS2 acoustic signaling and also due to the deployment of the acoustic transducers on a tether above the seabed (nominally 100 meters) provide longer horizontal ranging by minimizing of the impact of acoustic refraction in the water column. A subset of the FO measurements is utilized to create a passive network of sensors to continuously monitor positions along the entire length of the mooring line or riser, to supplement the one-way ranging technique, as illustrated as stars 7 in Figures 1 and 2. The accuracy of the system will be increased by creating a real-time water velocity volume (e.g. using a combination of PIES type sensors, Distributed Temperature measurements and the volumetric positioning network).

Additional elements of the system may include marinized (i.e. designed to be submerged in a marine environment) junction boxes 4, marinized data download system 5, and wet mate connectors along the anchor chain to allow cable splits 8 so that the floating and/or weighted cable system 6 can be installed. Use of an underwater optical communication system will provide highest bandwidth data transfer over short range between marinized data download device and mobile underwater vehicle (ROV or AUV). Using high power light emitting diodes (LED) as the transmitter and a receiver, and using photo multiplexors to increase sensitivity providing communication rates of up to 12.5Mbps at a range of 100 meters, or alternately using focused underwater laser beams to provide transmission rates of up to 500Mbps over a range of up to 7 meters. There may also be additional subsea infrastructure with a FO junction box and/or FO interrogator. Additionally, fiber-optic cable/sensors may be entrenched in the seafloor with the lead-in going back to the platform via the riser or J-tube. Figure 2 is a version of Figure 1 concentrating on the elements attached to the anchor chains.

The fiber optic cables or sensors for the outlined system can be attached to the offshore facilities in a number of ways. For facility elements that consist of solid pipe-like elements (e.g., risers, tendons), the fiber optic cable or sensors could be clamped to the outside of the cable. For facility elements that consist of rope-like elements (e.g., anchor chains or ropes), the fiber optic cable or sensors could be contained with the center core of the anchor chain or rope. The fiber optic cable element would consist of the glass fiber transmitting data, and additional strength and protection members in order to protect the cable from breakage, weather, and marine hazards.

Fiber-optic sensors have been placed on risers in order to monitor well integrity but such fiber-optic sensors are not used for seismic surveys. Performing an active seismic survey in the area around the platform generally involves one or more source vessels pulling seismic signal generators (e.g. air gun arrays, marine vibrators, sparkers, etc.). The seismic sources are triggered and the FO cables/sensors attached to the subsea infrastructure record the energy that has gone into the subsurface, been reflected and/or refracted, and returned as well as the direct wave through the water column. Alternatively, permanently deployed seismic sources may be deployed utilizing power sources from existing infrastructure or dedicated power generators. Referring to element 3 in Figures 1 and 2, the seismic data recorded by the FO cables/sensors is used for seismic imaging of the subsurface volume of interest and/or 4D seismic monitoring (also called time-lapse seismic, Life of Field seismic, and Permanent Reservoir Monitoring, among other names) of the subsurface. The seismic data may undergo a number of processing steps, such as deghosting, multiple removal, wavefield separation, receiver motion correction, spectral shaping, and the like. These examples are not meant to be limiting. In addition, the fiber-optic cables/sensors may require/lend themselves to additional processing steps to obtain useful seismic information. Those of skill in the art will appreciate that there are a number of useful seismic processing steps that may be applied to seismic data before it is deemed ready for imaging. The seismic data may be used to derive a subsurface velocity model, for example by semblance analysis, tomography, or full waveform inversion. The processed seismic data and subsurface velocity model are used to perform seismic imaging such as migration (e.g. wave-equation migration, Gaussian beam). Additionally, if an active seismic survey is not run, the FO cables/sensors may still record seismic signals that can be used for other purposes including but not limited to induced seismicity monitoring, microseismic measurements, passive interferometry, and subsurface integrity monitoring. Any of these techniques will produce seismic output volumes that may include, by way of example but not limitation, seismic post-stack images, seismic pre-stack images, and seismic attributes such as subsurface velocity.

Figure 3B demonstrates the improved subsurface image that could be obtained when using the FO cables shown in Figures 1 and 2 to record the seismic data. The seismic image covers a larger subsurface volume, providing more information farther from the wells than is seen in Figure 3A. Figure 4 demonstrates the "hole" created in seismic images due to the need to run the seismic survey around an existing platform. From left to right: seismic images that are towed streamer survey pre-platform installation, post platform installation, and platform infill using OBN.

A method for processing the recorded active or passive seismic data, including specific methods for utilizing fiber-optic sensor/cable measurements and producing seismic images and associated attributes is optionally governed by instructions that are stored in computer memory or a non-transitory computer readable storage medium and are executed by one or more processors of one or more computer systems. The computer readable storage medium may include a magnetic or optical disk storage device, solid state storage devices such as flash memory, or other non-volatile memory device or devices. The computer readable instructions stored on the computer readable storage medium may include one or more of: source code, assembly language code, object code, or another instruction format that is interpreted by one or more processors. In various embodiments, some operations in each method may be combined and/or the order of some operations may be changed from the order shown in the figures. For ease of explanation, the method has described as being performed by a computer system, although in some embodiments, various operations of the method are distributed across separate computer systems.

While particular embodiments are described above, it will be understood it is not intended to limit the invention to these particular embodiments. On the contrary, the invention includes alternatives, modifications that are within the scope of the appended claims. Numerous specific details are set forth in order to provide a thorough understanding of the subject matter presented herein. But, it will be apparent to one of ordinary skill in the art that the subject matter may be practiced (within the scope of the claims) without these specific details. In other instances, well-known methods, procedures, components, and circuits have not been described in detail so as not to unnecessarily obscure aspects of the embodiments.

The terminology used in the description of the invention herein is for the purpose of describing particular embodiments only and is not intended to be limiting of the invention. As used in the description of the invention and the appended claims, the singular forms "a," "an," and "the" are intended to include the plural forms as well, unless the context clearly indicates otherwise. It will also be understood that the term "and/or" as used herein refers to and encompasses any and all possible combinations of one or more of the associated listed items. It will be further understood that the terms "includes," "including," "comprises," and/or "comprising," when used in this specification, specify the presence of stated features, operations, elements, and/or components, but do not preclude the presence or addition of one or more other features, operations, elements, components, and/or groups thereof.

As used herein, the term "if" may be construed to mean "when" or "upon" or "in response to determining" or "in accordance with a determination" or "in response to detecting," that a stated condition precedent is true, depending on the context. Similarly, the phrase "if it is determined [that a stated condition precedent is true]" or "if [a stated condition precedent is true]" or "when [a stated condition precedent is true]" may be construed to mean "upon determining" or "in response to determining" or "in accordance with a determination" or "upon detecting" or "in response to detecting" that the stated condition precedent is true, depending on the context.

Although some of the various drawings illustrate a number of logical stages in a particular order, stages that are not order dependent may be reordered and other stages may be combined or broken out. While some reordering or other groupings are specifically mentioned, others will be apparent to those of ordinary skill in the art and so do not present an exhaustive list of alternatives. Moreover, it should be recognized that the stages could be implemented in hardware, firmware, software or any combination thereof.

The foregoing description, for purpose of explanation, has been described with reference to specific embodiments. However, the illustrative discussions above are not intended to be exhaustive or to limit the invention to the precise forms disclosed. Many modifications and variations are possible in view of the above teachings. The embodiments were chosen and described in order to best explain the principles of the invention and its practical applications, to thereby enable others skilled in the art to best utilize the invention and various embodiments with various modifications as are suited to the particular use contemplated.

### References

US Patent 4,970,697
US Patent 4,694,435
US Patent 5,113,377
US Patent 5,257,241
US Patent 6,256,589
Duquet, B., and K. Marfurt, 1999, filtering coherent noise during prestack depth migration: Geophysics, 64, 1054 - 1066.
Duquet, B., K. Marfurt, and J. Dellinger, 2000, Kirchhoff modeling, inversion for reflectivity, and subsurface illumination: Geophysics, 65, 1195 - 1209.
Nemeth, T., B. Cornish, W. Kempner, R. Langan, 2000, 3-D VSP migration imaging with constraints in Lost Hills, California: 70th Annual International Meeting, SEG, Expanded Abstracts, 1560 - 1563.
Stolk, C., and W. Symes, 2004, Kinematic artifacts in prestack depth migration: Geophysics, 69, 562 - 575.
Yu, J., and G. Schuster, 2004, Enhancing illumination coverage of VSP data by crosscorrelogram migration: 74th Annual International Meeting, SEG, Expanded Abstracts, 2501 - 2504.

## Claims

1. A system for performing seismic surveys, comprising:
a. devices configured for attaching fiber-optic cables/sensors to mooring lines of existing subsea infrastructure; and
b. devices configured for recording seismic data at the fiber-optic cables/sensors attached to the existing subsea infrastructure,
and **characterized in that** the system further comprises an integrated dynamic monitoring system (7) configured to determine the location of the fiber-optic cables/sensors using:
a one way ranging technique; and
the fiber-optic cables/sensors,
the integrated dynamic monitoring system (7) configured to utilize a subset of fiber-optic measurements to create a passive network of sensors to monitor positions along the length of the mooring lines and create a real-time water velocity volume.

2. The system of claim 1 wherein the seismic data are passive seismic data.

3. The system of claim 1 wherein the seismic data are active seismic data generated from active seismic sources.

4. The system of claim 1 further comprising a computer system configured to process the recorded seismic data and generate seismic images and associated attributes.

5. The system of claim 1 wherein the attaching the fiber-optic cables/sensors is done by fastening the fiber-optic cables/sensors to anchor chains of existing subsea infrastructure.

6. The system of claim 1 wherein the attaching the fiber-optic cables/sensors is done by incorporating the fiber-optic cables/sensors into the existing subsea infrastructure.

7. A method (3) for seismic imaging of a subsurface volume of interest, comprising:
a. recording seismic data using fiber-optic cables/sensors attached to mooring lines of existing subsea infrastructure;
b. processing the seismic data to create processed seismic data; and
c. generating digital seismic output volumes of the subsurface volume of interest from the processed seismic data,
and further comprises determining the location of the fiber-optic cables/sensors by an integrated dynamic monitoring system (7) using:
a one way ranging technique; and
the fiber-optic cables/sensors,
the integrated dynamic monitoring system (7) utilizing a subset of fibre-optic measurements to create a passive network of sensors to monitor positions along the length of the mooring lines and create a real-time water velocity volume.

## Patentansprüche

1. System zum Durchführen von seismischen Untersuchungen, umfassend:
a. Vorrichtungen, die zum Anbringen von faseroptischen Kabeln/Sensoren an Festmacherleinen einer bestehenden Unterwasserinfrastruktur ausgelegt sind; und
b. Vorrichtungen, die zum Aufzeichnen von seismischen Daten an den an der bestehenden Unterwasserinfrastruktur angebrachten faseroptischen Kabeln/Sensoren ausgelegt sind,
und **dadurch gekennzeichnet, dass** das System ferner ein integriertes dynamisches Überwachungssystem (7) umfasst, das so ausgelegt ist, dass es die Lage der faseroptischen Kabel/Sensoren bestimmt unter Verwendung:
einer Einweg-Ortungstechnik; und
der faseroptischen Kabel/Sensoren,
wobei das integrierte dynamische Überwachungssystem (7) zum Verwenden einer Teilmenge von faseroptischen Messungen zum Erstellen eines passiven Netzwerks von Sensoren zum Überwachen von Positionen entlang der Länge der Festmacherleinen und Erstellen eines Echtzeit-Wassergeschwindigkeitsvolumens ausgelegt ist.

2. System nach Anspruch 1, wobei die seismischen Daten passive seismische Daten sind.

3. System nach Anspruch 1, wobei die seismischen Daten aktive seismische Daten sind, die aus aktiven seismischen Quellen erzeugt werden.

4. System nach Anspruch 1, ferner umfassend ein Computersystem, das zum Verarbeiten der aufgezeichneten seismischen Daten und Erzeugen von seismischen Bildern und zugehörigen Attributen ausgelegt ist.

5. System nach Anspruch 1, wobei das Anbringen der faseroptischen Kabel/Sensoren durch Befestigen der faseroptischen Kabel/Sensoren an Ankerketten einer bestehenden Unterwasserinfrastruktur erfolgt.

6. System nach Anspruch 1, wobei das Anbringen der faseroptischen Kabel/Sensoren durch Integrieren der faseroptischen Kabel/Sensoren in die bestehende Unterwasserinfrastruktur erfolgt.

7. Verfahren (3) zur seismischen Abbildung eines Untergrundvolumens von Interesse, umfassend:
a. Aufzeichnen von seismischen Daten unter Verwendung von faseroptischen Kabeln/Sensoren, die an Festmacherleinen einer bestehenden Unterwasserinfrastruktur angebracht sind;
b. Verarbeiten der seismischen Daten, um verarbeitete seismische Daten zu erstellen; und
c. Erzeugen von digitalen seismischen Ausgabevolumina des Untergrundvolumens von Interesse aus den verarbeiteten seismischen Daten,
und ferner umfassend ein Bestimmen der Lage der faseroptischen Kabel/Sensoren durch ein integriertes dynamisches Überwachungssystem (7), das Folgendes verwendet:
eine Einweg-Ortungstechnik; und
die faseroptischen Kabel/Sensoren,
wobei das integrierte dynamische Überwachungssystem (7) eine Teilmenge von faseroptischen Messungen zum Erstellen eines passiven Netzwerks von Sensoren zum Überwachen von Positionen entlang der Länge der Festmacherleinen und Erstellen eines Echtzeit-Wassergeschwindigkeitsvolumens verwendet.

## Revendications

1. Système pour effectuer des relevés sismiques, comprenant :
a. des dispositifs conçus pour fixer des câbles/capteurs à fibres optiques à des lignes d'amarrage d'une infrastructure sous-marine existante ; et
b. des dispositifs conçus pour enregistrer des données sismiques au niveau des câbles/capteurs à fibres optiques fixés à l'infrastructure sous-marine existante,
et **caractérisé en ce que** le système comprend en outre un système de surveillance dynamique intégré (7) conçu pour déterminer l'emplacement des câbles/capteurs à fibres optiques en utilisant :
une technique de télémétrie unidirectionnelle ; et
les câbles/capteurs à fibres optiques,
le système de surveillance dynamique intégré (7) configuré pour utiliser un sous-ensemble de mesures par fibres optiques afin de créer un réseau passif de capteurs permettant de surveiller des positions suivant la longueur des lignes d'amarrage et de créer un volume de vitesse de l'eau en temps réel.

2. Système selon la revendication 1, dans lequel les données sismiques sont des données sismiques passives.

3. Système selon la revendication 1, dans lequel les données sismiques sont des données sismiques actives générées à partir de sources sismiques actives.

4. Système selon la revendication 1, comprenant en outre un système informatique conçu pour traiter les données sismiques enregistrées et générer des images sismiques et des attributs associés.

5. Système selon la revendication 1, dans lequel la fixation des câbles/capteurs à fibres optiques est effectuée en attachant les câbles/capteurs à fibres optiques à des chaînes d'ancres d'une infrastructure sous-marine existante.

6. Système selon la revendication 1, dans lequel la fixation des câbles/capteurs à fibres optiques est effectuée en incorporant les câbles/capteurs à fibres optiques dans l'infrastructure sous-marine existante.

7. Procédé (3) d'imagerie sismique d'un volume souterrain d'intérêt, comprenant :
a. l'enregistrement de données sismiques à l'aide de câbles/capteurs à fibres optiques fixés à des lignes d'amarrage d'infrastructures sous-marines existantes ;
b. le traitement des données sismiques pour créer des données sismiques traitées ; et
c. la génération de volumes de sortie sismiques numériques du volume souterrain d'intérêt à partir des données sismiques traitées,
et comprenant en outre la détermination de l'emplacement des câbles/capteurs à fibres optiques par un système de surveillance dynamique intégré (7) en utilisant :
une technique de télémétrie unidirectionnelle ; et
les câbles/capteurs à fibres optiques,
le système de surveillance intégré dynamique (7) utilisant un sous-ensemble de mesures par fibres optiques pour créer un réseau passif de capteurs permettant de surveiller des positions suivant la longueur des lignes d'amarrage et de créer un volume de vitesse de l'eau en temps réel.
